# EUROPÄISCHE PATENTSCHRIFT

(11) **EP 2 818 602 B1**
(45) Veröffentlichungstag und Bekanntmachung des Hinweises auf die Patenterteilung: **31.05.2017**
(21) Anmeldenummer: 13173722.3
(22) Anmeldetag: 26.06.2013
(51) Int. Cl.: E03F 5/04, B29C 45/14

(54) **Ablaufanordnung**
Drain assembly
Agencement d'évacuation

(43) Veröffentlichungstag der Anmeldung: 31.12.2014
(73) Patentinhaber: Geberit International AG, 8645 Jona (CH)
(72) Erfinder: Mächler, Daniel, 8645 Jona (CH); Hauri, Peter, 8634 Hombrechtikon (CH); Diethelm, Alois, 8857 Vorderthal (CH)
(74) Vertreter: Frischknecht, Harry Ralph

(56) Entgegenhaltungen:
- EP-A1- 2 333 171
- EP-A1- 2 463 450
- EP-A2- 2 551 415
- DE-U1-202009 015 791
- NL-C2- 2 001 817
- US-A1- 2011 047 695

## Beschreibung

### TECHNISCHES GEBIET

Die vorliegende Erfindung betrifft eine Ablaufanordnung, insbesondere für einen Bodenablauf oder Wandablauf, nach dem Oberbegriff von Anspruch 1.

### STAND DER TECHNIK

Aus der EP 2 333 171 ist ein gattungsgemäßer Bodenablauf für sanitäre Installationen bekannt geworden.

Der Bodenablauf weist eine Dichtungsfolie auf, welche während der Montage mit Teilen des Bodenablaufs verbunden wird. Die Dichtfolie wird dabei an einem Rahmen und Teilen der Beplankung während des Einbaus des Bodenablaufes vor Ort aufgeklebt.

Weiter setzt sich die Dichtfolie aus mehreren Dichtfolienteilen zusammen. Einerseits aus der u-förmigen Dichtfolie und andererseits aus einer Dichtfolie, welche dazu dient, den Rahmen dicht mit dem Bodenaufbau zu verbinden.

Mit dem Aufbau der Dichtung nach der EP 2 333 171 ist eine bezüglich Wasser dichte Struktur bereitstellbar. Allerdings ist das System bezüglich des Einbaus relativ komplex, was den Einbau für den Sanitärinstallateur erschwert. Gerade unter Zeitdruck oder bei ungelernten Kräften kann es zu Fehlern kommen, was zu undichten Stellen führen kann.

### DARSTELLUNG DER ERFINDUNG

Ausgehend von diesem Stand der Technik liegt der Erfindung eine Aufgabe zugrunde, eine Ablaufanordnung anzugeben, welches einfacher abdichtbar und sicherer in der Handhabe, insbesondere in der Montage, ist, und ein Verfahren zur Herstellung einer solchen Ablaufanordnung bereitzustellen. Diese Aufgabe wird durch die Ablaufanordnung nach dem Anspruch 1 gelöst. Demgemäss umfasst eine Ablaufanordnung für einen Wasserablauf, insbesondere einen Boden- oder Wandablauf, ein Einlaufgehäuse und eine Dichtfolie. Das Einlaufgehäuse weist eine Wandung, eine Einlassöffnung und eine Auslassöffnung auf. Die Wandung begrenzt einen Innenraum, welcher durch die Einlassöffnung und die Auslassöffnung zugänglich ist, wobei das abzuführende Wasser von der Einlassöffnung durch den Innenraum zur Auslassöffnung geführt wird. Das Einlaufgehäuse ist im Wesentlichen aus Kunststoff. Das Einlaufgehäuse ist an die Dichtfolie angespritzt, wodurch eine Haftstelle zwischen dem Einlaufgehäuse und der Dichtfolie bereitgestellt wird, welche Haftstelle einen Dichtbereich zwischen der Dichtfolie und dem Einlaufgehäuse bereitstellt. Das Einlaufgehäuse wird während der Herstellung des Einlaufgehäuses an die Dichtfolie angespritzt, wobei durch den Vorgang des Anspritzens die besagte Haftstelle gebildet wird.

Durch das Anspritzen des Einlaufgehäuses an der Dichtfolie wird ein Einlaufgehäuse geschaffen, dessen Dichtfolie bereits werkseitig, also direkt beim Spritzgiessen des Einlaufgehäuses, angebracht ist. Bei der Installation vor Ort muss sich der Installateur also nicht mehr mit der Abdichtung der Dichtfolie zum Einlaufgehäuse beschäftigen, was für ihn die Installation einfacher macht. Zugleich kann eine verbesserte Dichtung bereitgestellt werden, weil die Dichtfolie durch das Anspritzen stoffschlüssig von Werk aus mit dem Einlaufgehäuse in Verbindung steht. Auch bezüglich der Reproduzierbarkeit und der Qualitätssicherung weist das werkseitige Anspritzen des Einlaufgehäuses an die Dichtfolie Vorteile auf.

Weiter wird durch das Anspritzen des Einlaufgehäuses an die Dichtfolie eine stoffschlüssige bzw. innige Verbindung zwischen Einlaufgehäuse und Dichtfolie geschaffen, welche bezüglich der Dauerhaftigkeit besonders vorteilhaft ist.

Die Ablaufanordnung wird bevorzugt mittels eines Folienhinterspritzverfahrens hergestellt. Die Folie wird dabei mit dem Einlaufgehäuse haftend im Spritzgusswerkzeug verbunden.

Nach der Erfindung schliesst sich der Einlassöffnung einen sich von der Einlassöffnung in Fliessrichtung des Wassers erstreckender und dem Innenraum zugewandter Oberflächenbereich an. In Einbaulage wird der Oberflächenbereich seitlich sowie oberseitig durch einen sich im Wesentlichen rechtwinklig zum besagten Oberflächenbereich erstreckenden Flansch ergänzt und unterseitig wird der Oberflächenbereich ausschliesslich durch die Wandung begrenzt. Die Dichtfolie ist seitlich sowie oberseitig am besagten Oberflächenbereich und am besagten Flansch befestigt bzw. steht mit diesem in Verbindung. Unterseitig ist die Dichtfolie am besagten Oberflächenbereich verbunden. Mit anderen Worten gesagt ist das Einlaufgehäuse über den Flansch und die besagten Oberflächenbereiche an der Dichtfolie angespritzt. Dies hat den Vorteil, dass die Einbauhöhe durch das Befestigen der Dichtfolie unterseitig an dem zum Innenraum zugewandten Oberflächenbereich verkleinert werden kann. In dieser Weiterbildung wird wiederum das Einlaufgehäuse an der Dichtfolie angespritzt, wobei die Dichtfolie so mit dem Einlaufgehäuse verbunden ist.

Nach der Erfindung ist die Haftstelle zwischen der Dichtfolie und dem Einlaufgehäuse seitlich sowie oberseitig ausschliesslich am besagten Oberflächenbereich und am besagten Flansch und unterseitig ausschliesslich am besagten Oberflächenbereich angeordnet. Mit anderen Worten gesagt ist das Einlaufgehäuse seitlich und oberseitig über den Flansch und um die Einlassöffnung herum über die besagten Oberflächenbereiche an der Dichtfolie angespritzt. Folglich ragt die Dichtfolie mit einem Folienrand in die Einlassöffnung hinein und wird dort mit dem Einlassgehäuse verbunden. Aufgrund der Tatsache, dass die Dichtfolie unterseitig bündig mit dem Oberflächenbereich ist, welcher die Einlauffläche für das Wasser ist, ist keine Stufe vorhanden, welche den Eintritt des Wassers in das Einlaufgehäuse verhindern oder stören würde.

Unterseitig ist die Dichtfolie also nur auf der Einlauffläche, über welche das Wasser in den Innenraum geführt wird, mit dem Einlaufgehäuse in Verbindung.

Der besagte Oberflächenbereich wird durch die Wandung des Einlaufgehäuses bereitgestellt.

Vorzugsweise erstreckt sich die Dichtfolie durch die Einlassöffnung in das Einlaufgehäuse hinein, wobei die besagte Haftstelle im Innenraum liegt. Besonders bevorzugt erstreckt sich die Dichtfolie mit einem Randbereich teilweise in die Einlassöffnung hinein, wobei der Randbereich beispielsweise ein Mass von mindestens 5 mm aufweist. Folglich wird das Einlaufgehäuse über den Innenraum an die Dichtfolie angespritzt.

Vorzugsweise erstreckt sich die Dichtfolie vollständig um die Einlassöffnung herum und auch die Haftstelle erstreckt sich bevorzugt vollständig um die Einlassöffnung herum. Die Haftstelle kann dabei im Innenraum oder ausserhalb des Innenraums liegen. Hierdurch weist die Dichtfolie keinen Unterbruch auf, welcher eine Undichtigkeit bereitstellen könnte.

Vorzugsweise erstreckt sich die Haftstelle über die gesamte zur Dichtfolie hin orienterte Oberfläche des Einlaufgehäuses, insbesondere des Flansches und des Oberflächenbereiches. Alternativ erstreckt sich die Haftfläche über einen Teil der zur Dichtfolie hin orienterten Oberfläche des Einlaufgehäuse, insbesondere des Flansches und des Oberflächenbereiches.

Vorzugsweise erstreckt sich die Dichtfolie in einer Ebene, welche durch Vorderkanten der Einlassöffnung aufgespannt ist, über das Einlaufgehäuse hinaus. Besonders bevorzugt erstreckt sich die Dichtfolie um mindestens 100 mm über das Einlaufgehäuse hinaus.

Die Wandung des Einlaufgehäuses erstreckt sich von der Einlassöffnung in Fliessrichtung des Wassers und umgibt die Einlassöffnung vollständig, wobei durch die Wandung ein Innenraum bereitgestellt wird, und wobei in der Wandung die Auslassöffnung vorhanden ist.

Der Querschnitt der Einlassöffnung ist vorzugsweise rechteckig. Der Querschnitt der Auslassöffnung ist vorzugsweise rund, insbesondere kreisrund.

Vorzugsweise wird die Wandung durch eine Bodenwand, sich der Bodenwand anschliessende Seitenwände und durch eine Deckenwand bereitgestellt. Die Wände erstrecken sich von der Einlassöffnung in Fliessrichtung des Wassers und bilden den Innenraum, wobei die Auslassöffnung sich durch die Bodenwand erstreckt. Frontseitig im Bereich der Einlassöffnung kann die Wandung eine Frontwand umfassen. In einer besonders bevorzugten Ausführungsform erstreckt sich die Einlassöffnung über den gesamten Querschnitt des Innenraums, wodurch keine Frontwand vorhanden ist. Die Aufgabe wird auch durch das Verfahren nach dem Anspruch 8 gelöst.

In einem ersten Schritt eines Verfahrens zur Herstellung eines Einlaufgehäuses nach obiger Beschreibung wird die Dichtfolie in ein Spritzgusswerkzeug eingelegt und in einem dem ersten Schritt folgenden zweiten Schritt wird Kunststoff in das Spritzgusswerkzeug eingespritzt, wodurch das Einlaufgehäuse hergestellt und der Dichtfolie angespritzt wird. Die Einlassöffnung des Einlaufgehäuses wird vorzugsweise durch einen bewegbaren Kern im Spritzgusswerkzeug gebildet, wobei der besagte Kern durch eine Öffnung in der Dichtfolie nach dem Schritt des Einlegens der Dichtfolie und vor dem Schritt des Einspritzens des Kunststoffes bewegt wird.

Besonders bevorzugt ist der Kern grösser als die Öffnung, wobei dadurch die Dichtfolie leicht gedehnt wird und ein Folienrand entsteht, welcher sich im Wesentlichen rechtwinklig zur Dichtfolie erstreckt, wobei der Kunststoff am Folienrand und den sich dem Folienrand anschliessenden Randbereiche angespritzt wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Frontansicht eines Einlaufgehäuses nach einer Ausführungsform der vorliegenden Erfindung;
- Fig. 2: eine perspektivische Ansicht des Einlaufgehäuses nach Figur 1;
- Fig. 3: eine Schnittdarstellung durch das Einlaufgehäuse nach Figuren 1 und 2;
- Fig. 4: eine Detailansicht der Figur 3;

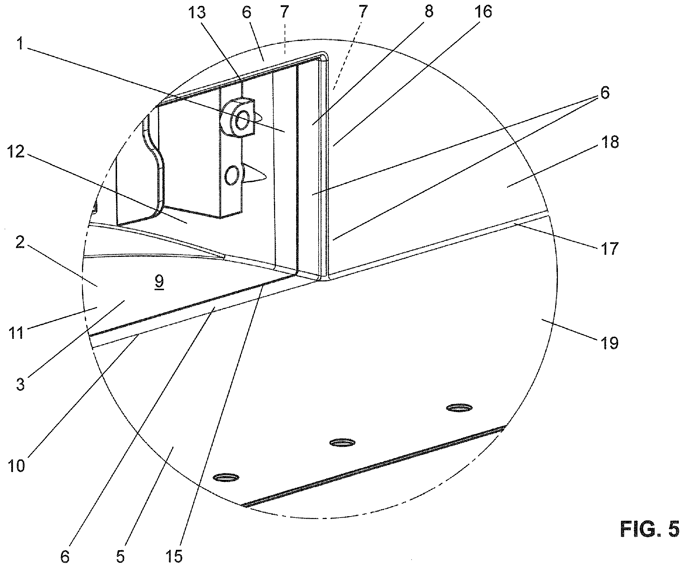

- Fig. 5: eine Detailansicht einer Ecke des Einlaufgehäuses nach den vorhergehenden Figuren; und
- Fig. 6: die Detailansicht gemäss Figur 5 mit eingezeichneten Haftstellen.

### BESCHREIBUNG BEVORZUGTER AUSFÜHRUNGSFORMEN

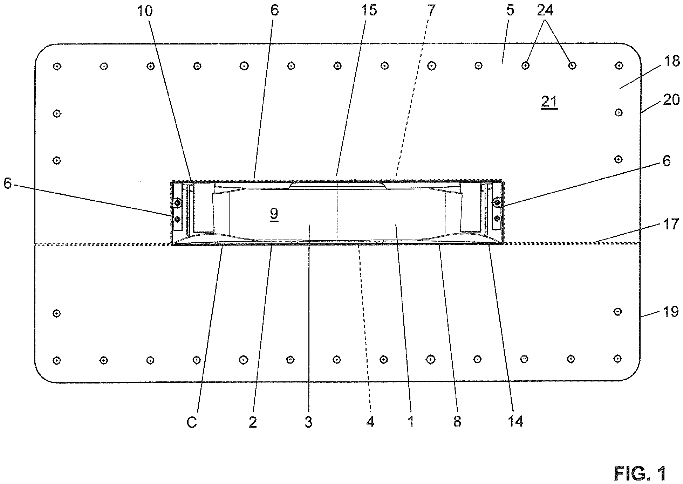

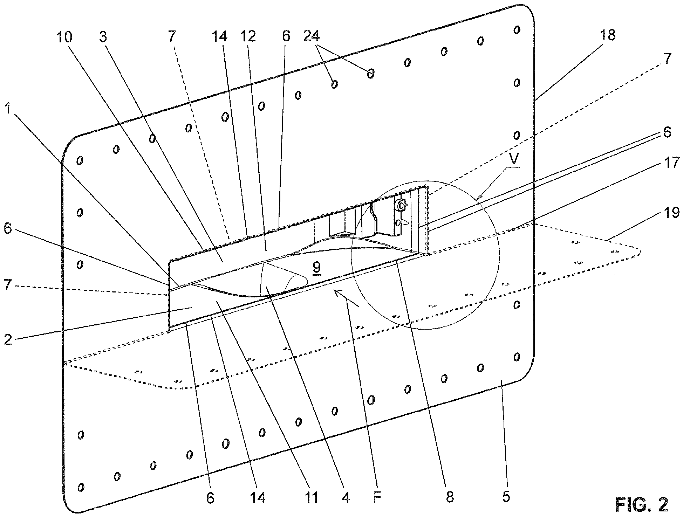

In den Figuren 1 und 2 werden Ansichten einer Ablaufanordnung gezeigt. Die Ablaufanordnung umfasst ein Einlaufgehäuse 1 und eine Dichtfolie 5. Die Ablaufanordnung stellt einen Wasserablauf für eine sanitäre Installation bereit. Die sanitäre Installation kann beispielsweise eine Dusche sein. Somit dient also die Ablaufanordnung der Entwässerung einer sanitären Einrichtung, wobei das wegzuführende Wasser durch das Einlaufgehäuse einer Abflussleitung zugeführt wird. Die Dichtfolie 5 dichtet das Einlaufgehäuse zur sanitären Installation ab.

Das Einlaufgehäuse 1 umfasst eine Wandung 2, die einen Innenraum 9 begrenzt, eine Einlassöffnung 3 und eine Auslassöffnung 4. Der Innenraum 9 ist über die Einlassöffnung 3 und die Auslassöffnung 4 zugänglich. Das Wasser fliesst von der sanitären Einrichtung kommend über die Einlassöffnung 3 in den Innenraum 9 des Einlaufgehäuses 1 ein und verlässt dieses über die Auslassöffnung 4. Das Einlaufgehäuse 1 ist hier aus Kunststoff.

Die Dichtfolie 5 ist hier als flexible Kunststoff-Folie ausgebildet, wobei sich die Dichtfolie 5 leicht an die Gegebenheiten der sanitären Installation anpassen lässt. Die Dichtfolie 5 bildet die Schnittstelle und die Dichtung zwischen der sanitären Installation und dem Einlaufgehäuse 1.

Das Einlaufgehäuse 1 wird während der Herstellung des Einlaufgehäuses 1 an die Dichtfolie 5 angespritzt. Die Dichtfolie 5 wird hierfür im Spritzgiesswerkzeug platziert und anschliessend wird der erwärmte Kunststoff für das Einlaufgehäuse 1 eingespritzt. Hierdurch wird das Einlaufgehäuse 1 stoffschlüssig mit der Dichtfolie 5 verbunden.

Während der Herstellung der Verbindung kommt es zu einer Wechselwirkung zwischen der Dichtfolie 5 und dem flüssigen Kunststoff, wobei die Oberfläche der Dichtfolie 5 durch den erwärmten Kunststoff ebenfalls lokal im Bereich des Einlaufgehäuses 1 erwärmt wird. Durch diese beidseitige Erwärmung kommt es zu der stoffschlüssigen Verbindung zwischen dem Einlaufgehäuse 1 und der Dichtfolie 5. Mit anderen Worten gesagt werden Einlaufgehäuse 1 und Dichtfolie 5 einstückig oder einteilig miteinander verbunden.

Durch das Anspritzen des Einlaufgehäuse 1 an der Dichtfolie 5 wird eine Haftstelle 6 zwischen dem Einlaufgehäuse 1 und der Dichtfolie 5 bereitgestellt. Die Haftstelle 6 ist dabei der Dichtbereich zwischen der Dichtfolie 5 und dem Einlaufgehäuse 1. Mit der Dichtfolie 5 kann das Einlaufgehäuse 1 bzw. die Ablaufanordnung gegenüber der sanitären Installation abgedichtet werden. Insbesondere dient die Dichtfolie 5 der Abdichtung zwischen Einlaufgehäuse 1 und einem Boden sowie einer Wand. Boden und Wand werden typischerweise mit Fliesen belegt, wobei sich die Dichtfolie 5 zwischen Fliesen und Boden bzw. Wand erstreckt.

In den Figuren 1 und 2 wird die Dichtfolie 5 in einer Ebene gezeigt. Im eingebauten Zustand wird die Dichtfolie 5 entlang einer Geraden 17, wie in der Figur 2 angedeutet, nach oben geklappt. Der hochgeklappte Bereich ist in den Figuren 1 und 2 gestrichelt dargestellt. Die Dichtfolie 5 weist also im eingebauten Zustand einen mit der Wand verbindbaren Dichtabschnitt 18 und einen mit dem Boden verbindbaren Dichtabschnitt 19 auf. Die beiden Dichtabschnitte 18, 19 stehen im Wesentlichen rechtwinklig zueinander. Aufgrund der Flexibilität der Dichtfolie 5 kann diese an unterschiedlichste Sanitär-Installationen angepasst werden.

Die Dichtfolie 5 erstreckt sich vollständig um die Einlassöffnung 3 herum und ggf. in die Einlassöffnung 3 hinein. Weiter erstreckt sich auch die Haftstelle 6 vollständig um die Einlassöffnung 3 herum, wodurch eine Dichtstelle bereitgestellt wird. Der Teil der Dichtfolie 5, welche sich in die Einlassöffnung 3 hinein erstreckt, kann als Folienrand 15 bezeichnet werden.

Die Dichtfolie 5 weist im Bereich der Einlassöffnung 3 eine Öffnung 14 auf, welche im Wesentlichen deckungsgleich mit der Einlassöffnung 3 ist. Die Öffnung 14 hat im Wesentlichen den gleichen Querschnitt und die gleiche Form wie die Einlassöffnung 3. Die Öffnung 14 wird dadurch bereitgestellt, indem sich die Dichtfolie 5, wie oben erwähnt, um die Einlassöffnung 3 herum erstreckt.

Die Haftstelle 6, an welcher das Einlaufgehäuse 1 mit der Dichtfolie 5 in Verbindung steht, kann unterschiedlich ausgebildet sein.

Einerseits schliesst sich der Einlassöffnung 3 ein in das Einlaufgehäuse 1 einragenden Oberflächenbereich 8 an. Die Dichtfolie 5 ragt dabei durch die Einlassöffnung 3 in das Einlaufgehäuse 1 hinein und das Einlaufgehäuse 1 ist an diesem Oberflächenbereich 8 an der Dichtfolie 5 angespritzt. Die Dichtfolie 5 weist hier also einen in die Einlassöffnung 3 einragenden Folienrand 15 auf.

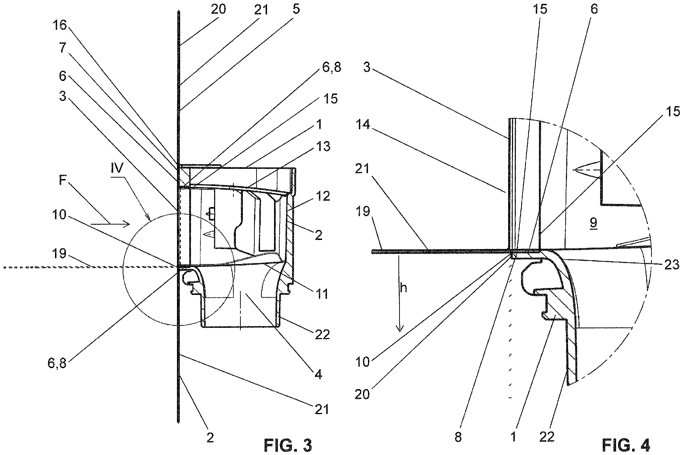

Andererseits umfasst das Einlaufgehäuse 1, wie in der Figur 3 gezeigt, einen Flansch 7, welcher sich teilweise um die Einlassöffnung 3 herum erstreckt. Der Flansch 7 ist Teil des Einlaufgehäuses 3 und das Einlaufgehäuse 1 ist über diesen Flansch 7 flächig an die Dichtfolie 5 angespritzt. Die Dichtfolie 5 steht über einen Randbereich 16 der Öffnung 14 mit dem Einlaufgehäuse 1 in Verbindung.

Die Dichtfolie 5 ist also sowohl mit dem Flansch 7 als auch mit dem Oberflächenbereich 8 verbunden. Eine erfindungsgemäße Ausführungsform, welche die kombinierte Anspritzung an Flansch 7 und Oberflächenbereich 8 zeigt, wird in der Folge noch detaillierter ausgeführt.

In der besagten Ausführungsform, welche in den Figuren gezeigt wird, weist das Einlaufgehäuse 1 einen Flansch 7 auf, welcher in Einbaulage sich oberseitig und seitlich von der Einlassöffnung 3 in einer Ebene erstreckt. Unterseitig, also gegenüber der Oberseite, weist das Einlaufgehäuse 1 keinen Flansch auf. Hier wird das Einlaufgehäuse 1 lediglich durch die Wandung 2 begrenzt. Weiter schliesst sich der Einlassöffnung 3 einen sich von der Einlassöffnung 3 in Fliessrichtung des Wasser erstreckender und dem Innenraum 9 zugewandter Oberflächenbereich 8 an. Seitlich und oberseitig wird der Oberflächenbereich 8 im Bereich der Einlassöffnung 3 durch den sich im Wesentlichen rechtwinklig zum besagten Oberflächenbereich 8 erstreckenden Flansch 7 ergänzt. Unterseitig wird der Oberflächenbereich 8 ausschliesslich durch die Wandung 2 begrenzt. Es ist unterseitig kein Flansch vorhanden. Die Dichtfolie 5 ist seitlich sowie oberseitig mit dem besagten Oberflächenbereich 8 und mit dem besagten Flansch 7 stoffschlüssig in Kontakt. Unterseitig ist die Dichtfolie 5 mit dem besagten Oberflächenbereich 8 stoffschlüssig in Kontakt. Seitlich ist die Dichtfolie 5 dann wiederum mit dem besagten Oberflächenbereich 8 und dem Flansch 7 stoffschlüssig in Kontakt. Dies wird in den Figuren 3 und 4 gezeigt.

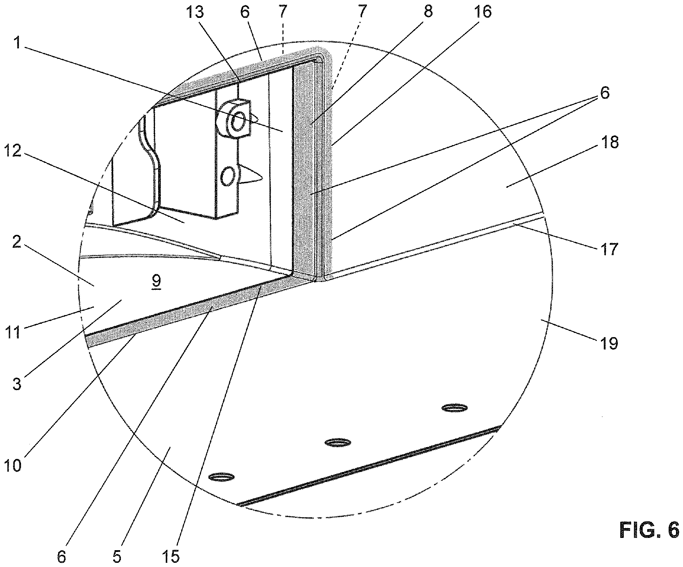

Folglich verläuft die Haftstelle 6 oberseitig und seitlich entlang des Flansches 7 und mündet dann über den Oberflächenbereich 8 in den Innenraum 9 des Einlaufgehäuses ein. Unterseitig verläuft die Haftstelle 6 im Wesentlichen ausschliesslich entlang des Oberflächenbereichs 8. Die Haftstellen 6 werden in der Figur 6 mit grau eingefärbten Bereichen dargestellt.

Unterseitig ist das Einlaufgehäuse 1 ausschliesslich bzw. nur über den besagten Oberflächenbereich 8 an der Dichtfolie 5 angespritzt. Folglich verläuft die Haftstelle 6 ausschliesslich im Innenraum 9 des Einlaufgehäuses 1. Stirnseitig, in der Figur 4 mit dem Bezugszeichen 20 versehen, ist die Dichtfolie 5 nicht mit dem Einlaufgehäuse 1 im Bereich der Unterseite verbunden. Dies hat den wesentlichen Vorteil, dass die Einbauhöhe des Einlaufgehäuses 1 unterhalb des Dichtabschnittes 19 verkleinert werden kann. Die Einbauhöhe trägt das Bezugszeichen h, welches in der Figur 4 symbolisch mit einem Pfeil eingezeichnet ist.

Der besagte Oberflächenbereich 8 wird durch die Wandung 2 des Einlaufgehäuses 1 bereitgestellt und erstreckt sich von den Vorderkanten 10 der Einlassöffnung in den Innenraum 9 hinein. Der besagte Oberflächenbereich 8 weist vorzugsweise eine Breite von der Vorderkante 10 gesehen von 2 bis 10 mm auf. Andere Dimensionen sind aber auch denkbar.

In der gezeigten Ausführungsform ragt die Dichtfolie 5 in den Innenraum 9 des Einlaufgehäuse 1 ein und wird im Innenraum 9 über die besagten Oberflächenbereiche 8 mit dem Einlaufgehäuse 1 verbunden. Hierdurch entsteht der Vorteil, dass durch das Einragen der Dichtfolie 5, keine in der Horizontalen liegende Kante der Dichtfolie 6 gegenüber des Einlaufgehäuses 1 gebildet wird, an welcher sich das abzuführende Wasser stauen könnte.

Die besagte Haftstelle 6, welche die Dichtstelle zwischen der Dichtfolie 5 und des Einlaufgehäuses 1 bereitstellt, erstreckt sich vorzugsweise über die gesamte zur Dichtfolie 5 hin orientierte Oberfläche des Einlaufgehäuses 1. Das heisst, dass die Dichtfolie 5, dort wo sie gegen das Einlaufgehäuse 1 gerichtet ist, vollflächig mit dem Einlaufgehäuse 1 verbunden ist. Somit können entsprechend breite Dichtstellen bereitgestellt werden, was für die dauerhafte Dichtigkeit von Vorteil ist. Alternativ kann die Haftstelle 6 auch so ausgebildet sein, dass sich diese nur über einen Teil der besagten Oberfläche erstreckt.

Von der Figur 1 und 2 kann weiter erkannt werden, dass sich die Dichtfolie 5 im nicht eingebauten Zustand sich im Wesentlichen in einer Ebene erstreckt. Die Ebene wird dabei durch die Vorderkanten 10 der Einlassöffnung 5 aufgespannt. Die Dichtfolie 5 erstreckt sich dabei über das Einlaufgehäuse 1 bzw. die Einlassöffnung 3 hinaus. Es entsteht also ein Rand 21, welcher oberseitig unterseitig sowie seitlich über das Einlaufgehäuse sich hinaus erstreckt. Die Dichtfolie 5 erstreckt sich vorzugsweise um mindestens 100 mm über das Einlaufgehäuse 1 hinaus. Die 100 mm sind als vorzugsweises Mass zu verstehen und können grösser oder auch kleiner sein. Der Rand 21 hat also eine Breite von im Wesentlichen mindestens 100 mm. Über diesen Rand kann eine grosse Klebefläche oder Dichtfläche zur sanitären Einrichtung bereitgestellt werden. Die Ablaufanordnung kann also gut in Fremdsysteme integriert werden.

Die Dichtfolie 5 ist in der vorliegenden Ausführungsform einstückig ausgebildet. Dies ist besonders vorteilhaft, weil die Dichtfolie 5 keinen Unterbruch aufweist, welcher eine Undichtigkeit darstellen könnte. Die Dichtfolie 5 ist vorzugweise aus einem thermoplastischen Kunststoff, insbesondere aus Polyethylen (PE) oder Polypropylen (PP). Besonders bevorzugt weist die Dichtfolie 5 einen mehrlagigen Schichtaufbau auf, wobei eine PP-PE-PP-Lagenstruktur besonders vorteilhaft ist. Auch kann ein PP-Trilaminat verwendet werden. Die Folie ist zudem elastisch verformbar, so dass diese beim Einbau leicht gedehnt werden kann. Diese elastische Verformbarkeit ist aber auch bei der Herstellung der Ablaufanordnung wichtig, wie die untenstehenden Ausführungen zeigen.

Die Form des Einlaufgehäuse 1 kann beliebig sein. In der in den Figuren gezeigten Ausführung erstreckt sich die Wandung 2 von der Einlassöffnung 3 in Fliessrichtung F des Wassers gesehen. Dabei wird die Einlassöffnung 2 von der Wandung 2 vollständig umgeben, wobei durch die Wandung 9 der Innenraum 9 bereitgestellt wird. In der Wandung 2 selbst ist zudem die Auslassöffnung 4 vorhanden. Die Auslassöffnung 4 steht hier senkrecht bzw. rechtwinklig zur Einlassöffnung und weist ausserhalb des Innenraums 9 einen Anschlussstutzen 22 auf, an welchem ein Abflussrohr, das hier nicht dargestellt ist, befestigbar ist. Strömungstechnisch ist die Auslassöffnung 4 mit entsprechenden Einlaufradien 23 versehen. Hierbei kann das Wasser besonders gut abfliessen.

Die Wandung 2 wird hier durch eine Bodenwand 11, eine sich der Bodenwand 11 anschliessende Seitenwand 12 und eine Deckenwand 13, die sich wiederum der Seitenwand 12 anschliesst, bereitgestellt. Die Wände 11, 12, 13 erstrecken sich in Fliessrichtung F gesehen von der Einlassöffnung 3 und bilden den besagten Innenraum 9. Die Auslassöffnung 4 erstreckt sich durch die Bodenwand 11. Vorzugsweise erstrecken sich die Bodenwand 11 und Deckenwand 13 im Wesentlichen parallel zueinander, wobei die Seitenwand 12 die Bodenwand 11 und die Deckenwand 13 verbindet.

Die Dichtfolie 5 weist weiter entlang ihres Randes eine Vielzahl von optionalen Befestigungsöffnungen 24 auf, welche der Befestigung der Dichtfolie 5 dienen.

Nach einem Verfahren zur Herstellung einer Ablaufanordnung gemäss obiger Beschreibung wird in einem ersten Schritt die Dichtfolie 5 in ein Spritzgusswerkzeug eingelegt wird und in einem dem ersten Schritt folgenden zweiten Schritt wird Kunststoff in das Spritzgusswerkzeug eingespritzt, wodurch das Einlaufgehäuse 1 hergestellt und der Dichtfolie 5 angespritzt wird.

Im Ursprungszustand weist die Dichtfolie 5 vorzugsweise eine ebene Form auf, wobei die Öffnung 14 bereits in der Dichtfolie 5 vorhanden ist.

Vorzugsweise wird die Einlassöffnung 3 des Einlaufgehäuses 1 durch einen bewegbaren Kern im Spritzgusswerkzeuge gebildet, wobei der besagte Kern durch die Öffnung 14 in der Dichtfolie 5 nach dem Schritt des Einlegens der Dichtfolie 5 und vor dem Schritt des Einspritzens des Kunststoffes bewegt wird.

Der besagte Kern ist vorzugsweise grösser als die Öffnung 14 in der Dichtfolie, wobei dadurch die Dichtfolie 5 leicht gedehnt wird und ein Folienrand 15 entsteht, welcher sich im Wesentlichen rechtwinklig zur Dichtfolie 5 erstreckt. Der Kunststoff wird am Folienrand 15 und vorzugsweise auch den sich dem Folienrand 15 anschliessenden Randbereiche 16 angespritzt wird. Der Folienrand 15 steht dann mit den oben beschriebenen Oberflächenbereich 8 in Verbindung und der Randbereich 16 steht mit dem Flansch 7 in Verbindung.

## Patentansprüche

1. Ablaufanordnung, insbesondere für einen Boden- oder Wandablauf, umfassend
ein Einlaufgehäuse (1) mit einer Wandung (2), die einen Innenraum (9) begrenzt, einer Einlassöffnung (3) sowie einer Auslassöffnung (4) und
eine Dichtfolie (5),
wobei das Einlaufgehäuse (1) im Wesentlichen aus Kunststoff ist, und wobei der Innenraum (9) durch die Einlassöffnung (3) und die Auslassöffnung (4) zugänglich ist und das abzuführende Wasser von der Einlassöffnung (3) zur Auslassöffnung (4) durch den Innenraum (9) führbar ist, wobei das Einlaufgehäuse (1) an die Dichtfolie (5) angespritzt ist, wodurch eine Haftstelle (6) zwischen dem Einlaufgehäuse (1) und der Dichtfolie (5) bereitgestellt wird, welche Haftstelle (6) einen Dichtbereich bereitstellt,
**dadurch gekennzeichnet,**
**dass** sich der Einlassöffnung (3) einen sich von der Einlassöffnung (3) in Fliessrichtung des Wassers erstreckender und dem Innenraum (9) zugewandter Oberflächenbereich (8) anschliesst, wobei in Einbaulage der Oberflächenbereich (8) seitlich sowie oberseitig durch einen sich im Wesentlichen rechtwinklig zum besagten Oberflächenbereich (8) erstreckenden Flansch (7) ergänzt wird und wobei unterseitig der Oberflächenbereich (8) ausschliesslich durch die Wandung (2) begrenzt wird,
**dass** das Einlaufgehäuse (1) seitlich sowie oberseitig ausschliesslich über den besagten Oberflächenbereich (8) und über den besagten Flansch (7) an der Dichtfolie (5) angespritzt ist, und dass das Einlaufgehäuse (1) unterseitig ausschliesslich über den besagten Oberflächenbereich (8) an der Dichtfolie (5) angespritzt ist.

2. Ablaufanordnung nach Anspruch 1, **dadurch gekennzeichnet, dass** sich die Dichtfolie (5) vollständig um die Einlassöffnung (3) herum erstreckt und dass sich die Haftstelle (6) vollständig um die Einlassöffnung (3) herum erstreckt.

3. Ablaufanordnung nach einem der vorhergehenden Ansprüche, **dadurch gekennzeichnet, dass** sich die Haftstelle (6) über die gesamte zur Dichtfolie hin orienterte Oberfläche des Einlaufgehäuse (1), insbesondere des Flansches (7) und des Oberflächenbereiches (8) erstreckt, oder dass sich die Haftfläche über einen Teil zur Dichtfolie (5) hin orienterte Oberfläche des Einlaufgehäuse (1), insbesondere des Flansches (7) und des Oberflächenbereiches (8), erstreckt.

4. Ablaufanordnung nach einem der vorhergehenden Ansprüche, **dadurch gekennzeichnet, dass** die Dichtfolie (5) sich in einer Ebene, welche durch Vorderkanten (10) der Einlassöffnung (5) aufgespannt ist, über das Einlaufgehäuse (1) hinaus erstreckt, wobei sich die Dichtfolie (5) vorzugsweise um mindestens 100 mm über das Einlaufgehäuse (1) erstreckt.

5. Ablaufanordnung nach einem der vorhergehenden Ansprüche, **dadurch gekennzeichnet, dass** die Dichtfolie (5) einstückig ist und/oder dass die Dichtfolie (5) faltbar ist und/oder dass die Dichtfolie (5) aus einem thermoplastischen Kunststoff, insbesondere Polyethylen und/oder Polypropylen ist.

6. Ablaufanordnung nach einem der vorhergehenden Ansprüche, **dadurch gekennzeichnet, dass** sich die Wandung (2) von der Einlassöffnung (3) in Fliessrichtung des Wassers erstreckt und die Einlassöffnung (2) vollständig umgibt, wobei durch die Wandung (2) ein Innenraum (9) bereitgestellt wird, und wobei in der Wandung (2) die Auslassöffnung (4) vorhanden ist.

7. Ablaufanordnung nach Anspruch 6, **dadurch gekennzeichnet, dass** die Wandung (2) durch eine Bodenwand (11), durch Seitenwände (12) und durch eine Deckenwand (13) bereitgestellt wird, wobei die Bodenwand (11) und die Deckenwand (13) durch die Seitenwand (12) verbunden sind, und wobei die besagten Wände sich von der Einlassöffnung (3) in Fliessrichtung des Wassers erstrecken und einen Innenraum (9) bilden, wobei die Auslassöffnung (4) sich durch die Bodenwand (11) erstreckt.

8. Verfahren zur Herstellung einer Ablaufanordnung nach einem der vorhergehenden Ansprüche, **dadurch gekennzeichnet, dass** in einem ersten Schritt die Dichtfolie (5) in ein Spritzgusswerkzeug eingelegt wird und dass in einem dem ersten Schritt folgenden zweiten Schritt Kunststoff in das Spritzgusswerkzeug eingespritzt wird, wodurch das Einlaufgehäuse (1) hergestellt und an der Dichtfolie (5) angespritzt wird.

9. Verfahren nach Anspruch 8, **dadurch gekennzeichnet, dass** die Einlassöffnung (3) des Einlaufgehäuses (1) durch einen bewegbaren Kern im Spritzgusswerkzeuge gebildet wird, wobei der besagte Kern durch eine Öffnung (14) in der Dichtfolie (5) nach dem Schritt des Einlegens der Dichtfolie (5) und vor dem Schritt des Einspritzens des Kunststoffes bewegt wird.

10. Verfahren nach Anspruch 9, **dadurch gekennzeichnet, dass** der Kern grösser als die Öffnung (14) ist, wobei dadurch die Dichtfolie (5) leicht gedehnt wird und ein Folienrand (15) entsteht, welcher sich im Wesentlichen rechtwinklig zur Dichtfolie (5) erstreckt, wobei der Kunststoff am Folienrand (15) und vorzugsweise den sich dem Folienrand (15) anschliessenden Randbereiche (16) angespritzt wird.

11. Dichtungsanordnung umfassend eine Ablaufanordnung nach einem der vorhergehenden Ansprüche 1 bis 10, **dadurch gekennzeichnet, dass** die Dichtfolie (5) einen mit einer Wand verbindbaren Dichtabschnitt und einen mit dem Boden verbindbaren Dichtabschnitt aufweist, wobei die Dichtabschnitte im Wesentlichen im rechten Winkel zueinander stehen.

## Claims

1. Drain assembly, in particular for a floor drain or a wall drain, comprising an inlet housing (1) with a wall (2) which delimits an interior space (9), and with an inlet opening (3) as well as an outlet opening (4) and
a sealing film (5),
wherein the inlet housing (1) is substantially made of plastic and wherein the interior space (9) is accessible through the inlet opening (3) and the outlet opening (4) and the water to be drained can be conveyed from the inlet opening (3) through the interior space (9) to the outlet opening (4), wherein the inlet housing (1) is injection-moulded to the sealing film (5), as a result of which an adhesion section (6) between the inlet housing (1) and the sealing film (5) is produced, which adhesion section (6) provides a seal area,
**characterized in that**
a surface region (8) facing the interior space (9) and extending from the inlet opening (3) in the flow direction of the water is connected to the inlet opening (3), wherein in the installation position, the surface region (8) is supplemented at the sides and at the top by a flange (7) extending substantially at right angles to the aforementioned surface region (8), and wherein at the bottom, the surface region (8) is exclusively limited by the wall (2),
that the inlet housing (1) is injection-moulded to the sealing film (5) at the sides and at the top exclusively via the aforementioned surface region (8) and via the aforementioned flange (7) and that the inlet housing (1) is injection-moulded to the sealing film (5) on the bottom exclusively via the aforementioned surface region (8).

2. Drain assembly according to Claim 1, **characterized in that** the sealing film (5) extends right around the inlet opening (3) and that the adhesion section (6) extends completely around the inlet opening (3).

3. Drain assembly according to one of the preceding claims, **characterized in that** the adhesion section (6) extends over the entire surface of the inlet housing (1) oriented towards the sealing film, in particular of the flange (7) and of the surface region (8), or that the adhesion surface extends over part of the surface of the inlet housing (1) oriented towards the sealing film (5), in particular of the flange (7) and of the surface region (8).

4. Drain assembly according to one of the preceding claims, **characterized in that** the sealing film (5) extends in a plane which is spanned by front edges (10) of the inlet opening (5) beyond the inlet housing (1), wherein the sealing film (5) preferably extends beyond the inlet housing (1) by at least 100 mm.

5. Drain assembly according to one of the preceding claims, **characterized in that** the sealing film (5) is of one-piece configuration and/or that the sealing film (5) can be folded and/or that the sealing film (5) is made of a thermoplastic, in particular polyethylene and/or polypropylene.

6. Drain assembly according to one of the preceding claims, **characterized in that** the wall (2) extends from the inlet opening (3) in the flow direction of the water and completely surrounds the inlet opening (2), wherein an interior space (9) is provided by the wall (2) and wherein the outlet opening (4) is present in the wall (2).

7. Drain assembly according to Claim 6, **characterized in that** the wall (2) is provided by a floor wall (11), side walls (12) and a ceiling wall (13), wherein the floor wall (11) and the ceiling wall (13) are connected by the side wall (12) and wherein the aforementioned walls extend from the inlet opening (3) in the flow direction of the water and form an interior space (9), wherein the outlet opening (4) extends through the floor wall (11).

8. Method for producing a drain assembly according to one of the preceding claims, **characterized in that** in a first step the sealing film (5) is inserted into an injection mould and in a second step following the first step, plastic is injected into the injection mould, as a result of which the inlet housing (1) is produced and injection-moulded to the sealing film (5).

9. Method according to Claim 8, **characterized in that** the inlet opening (3) of the inlet housing (1) is formed by a movable core in the injection mould, wherein the aforementioned core is moved through an opening (14) in the sealing film (5) following the step involving inserting the sealing film (5) and before the step involving injecting the plastic.

10. Method according to Claim 9, **characterized in that** the core is larger than the opening (14), wherein the sealing film (5) is thereby easily stretched and a film edge (15) is created which extends substantially at right angles to the sealing film (5), wherein the plastic is injection-moulded to the film edge (15) and preferably to the peripheral regions (16) attached to the film edge (15).

11. Sealing assembly comprising a drain assembly according to one of the preceding Claims 1 to 10, **characterized in that** the sealing film (5) comprises a sealing section that can be connected to a wall and a sealing section that can be connected to the floor, wherein the sealing sections are arranged substantially at right angles to one another.

## Revendications

1. Déversoir, en particulier pour évacuation de sol ou de mur, comprenant
un boîtier d'entrée (1) présentant une paroi (2) qui délimite un espace intérieur (9), une ouverture d'entrée (3) et une ouverture d'évacuation (4) et
une feuille d'étanchéité (5),
le boîtier d'entrée (1) étant réalisé essentiellement en matière synthétique, l'espace intérieur (9) étant accessible par l'intermédiaire de l'ouverture d'entrée (3) et de l'ouverture d'évacuation (4) et l'eau à évacuer pouvant être guidée de l'ouverture d'entrée (3) à l'ouverture d'évacuation (4) à travers de l'espace intérieur (9), le boîtier d'entrée (1) étant moulé par injection sur la feuille d'étanchéité (5), un emplacement d'adhérence (6) entre le boîtier d'entrée (1) et la feuille d'étanchéité (5) étant prévu et cet emplacement d'adhérence (6) formant une partie étanche, **caractérisé en ce que**
l'ouverture d'entrée (3) raccorde une partie (8) de surface qui part de l'ouverture d'entrée (3) dans la direction d'écoulement de l'eau et qui est tournée vers l'espace intérieur (9), la partie de surface (8) étant complétée en position montée, latéralement et dans son côté supérieur, par une bride (7) qui s'étend essentiellement à angle droit par rapport à ladite partie de surface (8), la partie de surface (8) étant délimitée dans sa partie inférieure uniquement par la paroi (2),
**en ce que** latéralement ainsi que dans sa partie supérieure, le boîtier d'entrée (1) est moulé par injection sur la feuille d'étanchéité (5) exclusivement par l'intermédiaire de ladite partie de surface (8) et de ladite bride (7) et
**en ce que** dans sa partie inférieure, le boîtier d'entrée (1) est moulé par injection sur la feuille d'étanchéité (5) exclusivement par l'intermédiaire de ladite partie de surface (8).

2. Déversoir selon la revendication 1, **caractérisé en ce que** la feuille d'étanchéité (5) entoure complètement l'ouverture d'entrée (3) et **en ce que** l'emplacement d'adhérence (6) entoure complètement l'ouverture d'entrée (3).

3. Déversoir selon l'une des revendications précédentes, **caractérisé en ce que** l'emplacement d'adhérence (6) s'étend sur toute la surface, tournée vers la feuille d'étanchéité, du boîtier d'entrée (1), et en particulier de la bride (7) et de la partie de surface (8), ou **en ce que** la surface d'adhérence s'étend sur une partie de la surface, orientée vers la feuille d'étanchéité (5), du boîtier d'entrée (1), et en particulier de la bride (7) et de la partie de surface (8).

4. Déversoir selon l'une des revendications précédentes, **caractérisé en ce que** la feuille d'étanchéité (5) déborde au-dessus du boîtier d'entrée (1) dans un plan tendu par les bords avant (10) de l'ouverture d'entrée (5), la feuille d'étanchéité (5) débordant de préférence sur au moins 100 mm au-dessus du boîtier d'entrée (1).

5. Déversoir selon l'une des revendications précédentes, **caractérisé en ce que** la feuille d'étanchéité (5) est réalisée d'un seul tenant, et/ou **en ce que** la feuille d'étanchéité (5) est repliable et/ou **en ce que** la feuille d'étanchéité (5) est réalisée en une matière synthétique thermoplastique, en particulier en polyéthylène et/ou en polypropylène.

6. Déversoir selon l'une des revendications précédentes, **caractérisé en ce que** la paroi (2) part de l'ouverture d'entrée (3) dans la direction d'écoulement de l'eau et entoure complètement l'ouverture d'entrée (2), un espace intérieur (9) étant formé par la paroi (2) et l'ouverture d'évacuation (4) étant prévue dans la paroi (2).

7. Déversoir selon la revendication 6, **caractérisé en ce que** la paroi (2) est formée par une paroi de fond (11), des parois latérales (12) et une paroi de couvercle (13), la paroi de fond (11) et la paroi de couvercle (13) étant reliées par la paroi latérale (12), lesdites parois partant de l'ouverture d'entrée (3) dans la direction d'écoulement de l'eau et formant un espace intérieur (9), l'ouverture d'évacuation (4) traversant la paroi de fond (11).

8. Procédé de fabrication d'un déversoir selon l'une des revendications précédentes, **caractérisé en ce que** dans une première étape, la feuille d'étanchéité (5) est placée dans un outil de moulage par injection et **en ce que** dans une deuxième étape qui suit la première étape, une matière synthétique est injectée dans l'outil de moulage par injection, par quoi le boîtier d'entrée (1) est fabriqué et moulé par injection sur la feuille d'étanchéité (5).

9. Procédé selon la revendication 8, **caractérisé en ce que** l'ouverture d'entrée (3) du boîtier d'entrée (1) est formée par un noyau mobile dans l'outil de moulage par injection, ledit noyau étant déplacé à travers d'une ouverture (14) ménagée dans la feuille d'étanchéité (5) après l'étape de placement de la feuille d'étanchéité (5) et avant l'étape d'injection de la matière synthétique.

10. Procédé selon la revendication 9, **caractérisé en ce que** le noyau est plus grand que l'ouverture (14), la feuille d'étanchéité (5) étant ainsi légèrement étirée et un bord (15) de feuille qui s'étend essentiellement à angle droit par rapport à la feuille d'étanchéité (5) étant formé, la matière synthétique étant injectée sur le bord (15) de la feuille et de préférence sur les parties (16) du bord qui se raccordent au bord (15) de la feuille.

11. Ensemble d'étanchéité comprenant un déversoir selon l'une des revendications 1 à 10 précèdentes, **caractérisé en ce que** la feuille d'étanchéité (5) présente une section d'étanchéité apte à être reliée à une paroi et une section d'étanchéité apte à être reliée au sol, les sections d'étanchéité étant disposées essentiellement à angle droit l'une par rapport à l'autre.
